(19) Europäisches Patentamt
European Patent Office
Office européen des brevets

(11) **EP 2 053 860 A1**

## (12) EUROPEAN PATENT APPLICATION
published in accordance with Art. 153(4) EPC

(43) Date of publication:
**29.04.2009 Bulletin 2009/18**

(21) Application number: **07768329.0**

(22) Date of filing: **06.07.2007**

(51) Int Cl.:
*H04N 7/18* (2006.01)     *G06T 1/00* (2006.01)
*G06T 3/00* (2006.01)     *G08G 1/16* (2006.01)

(86) International application number:
**PCT/JP2007/063604**

(87) International publication number:
**WO 2008/020516 (21.02.2008 Gazette 2008/08)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.08.2006   JP 2006223278**

(71) Applicant: **Panasonic Corporation
Kadoma-shi
Osaka 571-8501 (JP)**

(72) Inventor: **MIZUSAWA, Kazufumi
c/o Panasonic Corporation IPROC
2-1-61, Shiromi, Chuo-ku, Osaka 540-6207 (JP)**

(74) Representative: **Grünecker, Kinkeldey,
Stockmair & Schwanhäusser
Anwaltssozietät
Leopoldstraße 4
80802 München (DE)**

(54) **ON-VEHICLE IMAGE PROCESSING DEVICE AND ITS VIEWPOINT CONVERSION INFORMATION GENERATION METHOD**

(57)     To provide a vehicle-installed image processing apparatus and an eye point conversion information generation method of the apparatus capable of easily providing an appropriate virtual image responsive to the vehicle model.

A projection model storage section 41 stores position information of a plurality of points on a predetermined projection model. A computation section 30 references the projection model storage section 41 and acquires position information of a virtual image correspondence point of a point corresponding to a pixel of the virtual image in an area on the projection model specified as a target of the virtual image by an output range specification section 20. The computation section 30 finds the pixel of a real image corresponding to the virtual image correspondence point, acquires a mapping table indicating the correspondence between the pixels of the virtual image and the pixels of the real image, and records the mapping table in a mapping table storage section 42. An image synthesis section 50 references the mapping table storage section 42 and converts an image input from an image pickup section 10 into a virtual image viewed from a predetermined virtual eye point.

*FIG. 1*

## Description

Technical Field

This invention relates to a vehicle-installed image processing apparatus for converting an image input from an image pickup section for picking up a real image into a virtual image viewed from a predetermined virtual eye point and an eye point conversion information generation method of the apparatus.

Background Art

For the purpose of improving the convenience of the user of a vehicle driver, etc., an image processing apparatus for generating a composite image viewed from a virtual eye point above a vehicle using picked-up images of a plurality of cameras for photographing the surroundings of the vehicle is available (for example, refer to patent document 1).

The image processing apparatus described in patent document 1 combines images input from two different cameras and changes the pixel position to generate an output image in accordance with a conversion address (mapping table) indicating the correspondence between the position coordinates of output pixels and the pixel positions of an input image, thereby realizing smooth combining of the input images from a plurality of different cameras and converting the image into an image from a virtual eye point in real time. However, to combine images in real time, it is necessary to previously record a mapping table used for combining the images.

A creation procedure of the mapping table will be discussed. To create the mapping table, it is necessary to determine the coordinates of each pixel of each camera corresponding to each pixel of a composite image viewed from the virtual eye point (the attachment position of a virtual camera). This correspondence determining procedure is divided into two steps of a step of finding the position of a point on world coordinates corresponding to each pixel of the composite image from the virtual eye point and a step of finding the coordinates of the corresponding pixel on a real camera, of the found position of the point on the world coordinates.

The relationship finally recorded in the mapping table is only the relationship between each pixel of the composite image of the virtual eye point and the pixel of each camera image (real image) and the creation procedure of the mapping table is not limited to the method via the points on the world coordinates described above; however, the mapping table via the points on the world coordinates is excellent in generating a composite image with the environment easily associated with the actual distance and position relationship because meaning in the world coordinate system of the coordinates of a composite image in the real world become definite.

The relationship between a pixel position of a virtual camera $[mi] = (xi, yi)$ and camera coordinates of the virtual camera $[Pi] = (Xi, Yi, Zi)$ is as follows:

$$xi = Xi/Zi$$

(where Zi is not 0)

$$yi = Yi/Zi$$

(where Zi is not 0)

Conversion from the camera coordinates of the virtual camera [Pi] to world coordinates [Pw] according to three-dimensional rotation [Ri] and translation [Tr] is as follows:

$$[Pw] = [Ri] [Pi] + [Ti]$$

Likewise, conversion from the world coordinates [Pw] to camera coordinates of the real camera [Pr] according to three-dimensional rotation [Rr] and translation [Tr] is as follows:

$$[Pr] = [Rr] [Pw] + [Tr]$$

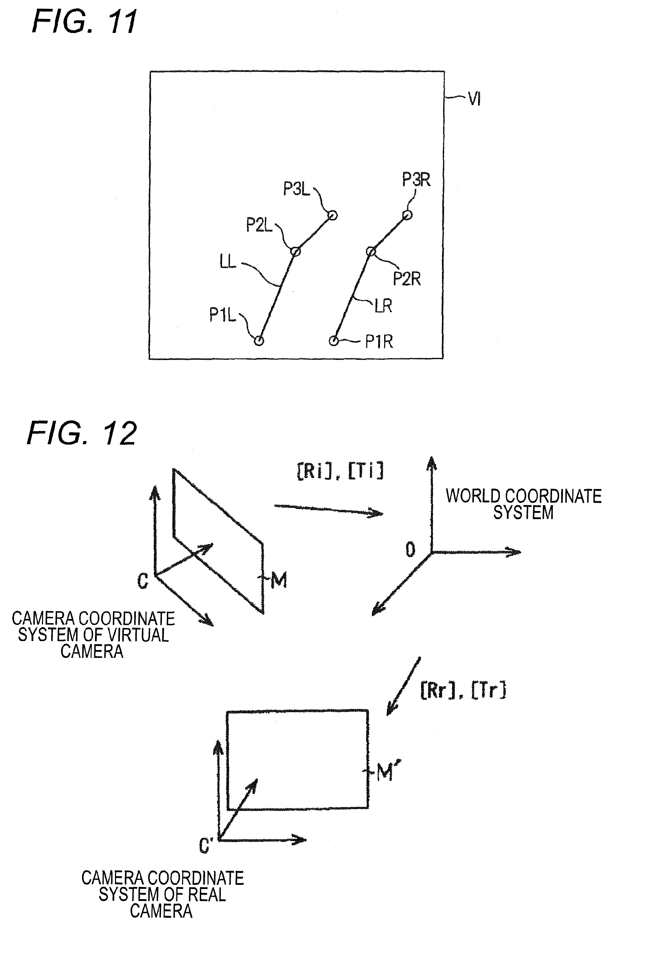

FIG. 12 schematically shows the conversion from the camera coordinate system of the virtual camera to the world coordinate system and the conversion from the world coordinate system to the camera coordinate system of the real camera. That is, an image M represented by a camera coordinate system C of the virtual camera and an image M' represented by a camera coordinate system C' of the real camera are associated with each other through an image world coordinate system O.

Conversion from camera coordinates of the real camera $[Pr] = (Vxe, Vye, Vze)$ to two-dimensional coordinates on the projection plane of the real camera $[Mr] = (xr, yr)$ using a focal length fv by perspective projection conversion is as follows:

$$xr = (fv/Vze) \bullet Vxe$$

$$yr = (fv/Vze) \bullet Vye$$

The position resulting from converting this into pixel units and correcting the position considering lens distortion conforming to the real camera becomes the pixel position in the real camera. To correct the lens distortion, a method of using a table recording the relationship between the distance from the lens center and the correction amount, a method of approximating based on a mathematical distortion model, or the like is available.

At this time, the three-dimensional shape of the object existing in the world coordinate system is unknown and thus magnification λ (λ is a real number other than 0) of [Pi] becomes undefined in conversion from the pixel position of the virtual camera [mi] to the camera coordinates of the virtual camera [Pi]. That is, in FIG. 12, points on a line 1, for example, point K and point Q are all projected onto the same pixel position X (xi, yi). Thus, one point on the line l is determined by assuming an appropriate projection model for the shape of the target viewed from the virtual eye point. This means that the intersection point of the projection model and the line l is found and is adopted as the point on the world coordinates.

For example, a plane of Zw=0 in the world coordinate system, etc., is possible as the projection model. An appropriate projection model is thus set, whereby it is made possible to calculate the correspondence between each pixel [Pi] of the composite image of the virtual eye point and the pixel [Pr] of the real camera image according to the procedure described above.

Calculating the correspondence requires an enormous amount of computation, such as coordinate calculation of each point on the projection model, conversion between the camera coordinates and the world coordinates and further if the number of cameras is large, calculation as to which camera the coordinates on the projection model are reflected on.

Then, an image synthesis conversion apparatus for making it possible to easily create in a small computation amount a mapping table for converting the picked-up image of a real camera into an image viewed from a virtual eye point exists (for example, refer to patent document 2).

The image synthesis conversion apparatus has three-dimensional coordinate record means for recoding a three-dimensional position on a projection model corresponding to the previously calculated pixel position of a virtual camera. This eliminates the need for executing an enormous amount of computation required for finding the three-dimensional position at the creation time of a mapping table, and perspective projection conversion and distortion correction computation need only to be performed.

Patent document 1: International Publication No. 00/64175 pamphlet
Patent document 2: JP-A-2003-256874

Disclosure of the Invention

Problems to be Solved by the Invention

However, in the image synthesis conversion apparatus described above, the three-dimensional coordinate record means previously associating the pixels of a virtual image and the points on a projection model is used and thus the virtual image is fixed to a determined area of the projection model. On the other hand, the range on the projection model that can be picked up by a real camera varies depending on the attachment position and the angle of the real camera.

For example, in one vehicle type, only about a half of the range that can be picked up by a real camera may be used for a virtual image; in a different vehicle type, the range that cannot be picked up by a real camera may be contained in a virtual image. Therefore, to obtain an appropriate virtual image suited to the image pickup range of a real camera, three-dimensional coordinate record means previously associating the pixels of a virtual image and the points on a projection model needs to be equipped for each vehicle model; this is the actual circumstances.

The invention is embodied considering the actual circumstances described above and it is an object of the invention to provide a vehicle-installed image processing apparatus and an eye point conversion information generation method of the apparatus capable of easily providing an appropriate virtual image responsive to the vehicle model. Means For Solving the Problems

First, the invention provides a vehicle-installed image processing apparatus for converting an image input from an image pickup section for picking up a real image into a virtual image viewed from a predetermined virtual eye point, the vehicle-installed image processing apparatus including a projection model storage section for storing position information of a plurality of points on a predetermined projection model; a position information acquisition section for referencing the projection model storage section and acquiring position information of each point on the projection model that each pixel of the virtual image projects as a virtual image correspondence point in an area on the projection model separately specified as a display range target of the virtual image; and an eye point conversion information acquisition section for finding the pixel of the real image reflecting the virtual image correspondence point and acquiring eye point conversion information indicating the correspondence between the pixel of the virtual image and the pixel of the real image.

According to the configuration, the area on the projection model to which the virtual image applies is specified based on the position information of a plurality of points on the projection model stored in the projection model storage section and the eye point conversion information is generated, so that the appropriate virtual image responsive to the vehicle model can be easily obtained.

Second, the invention provides the vehicle-installed image processing apparatus as first described above wherein if the number of the points in the specified area on the projection model stored in the projectionmodel storage section does not match the number of the pixels of the virtual image, the position information acquisition section uses the points stored in the projection model storage section to find the position information of the virtual image correspondence points.

According to the configuration, the eye point conversion information can be generated flexibly in response to the area on the projection model to which the virtual image applies.

Third, the invention provides the vehicle-installed image processing apparatus as first or second described above wherein the projection model storage section stores path data indicating a vehicular swept path predicted in response to the state of a vehicle in association with the position information of the points on the projection model, and wherein the position information acquisition section associates the position information of the virtual image correspondence points with the path data and the eye point conversion information acquisition section associates the path data with the pixels of the virtual image to generate the eye point conversion information.

According to the configuration, the path data is associated with the eye point conversion information, so that the computation amount for superposing the predicted vehicular swept path on the virtual image for display can be suppressed.

Fourth, the invention provides an eye point conversion information generation method of a vehicle-installed image processing apparatus for converting an image input from an image pickup section for picking up a real image into the virtual image viewed from a predetermined virtual eye point, the eye point conversion information generation method having the steps of referencing a projection model storage section for storing position information of a plurality of points on a predetermined projection model and acquiring position information of each point on the projection model that each pixel of the virtual image projects as a virtual image correspondence point in an area on the projection model separately specified as a display range target of the virtual image; and finding the pixel of the real image reflecting the virtual image correspondence point and acquiring eye point conversion information indicating the correspondence between the pixel of the virtual image and the pixel of the real image.

According to this method, the area on the projection model to which the virtual image applies is specified based on the position information of a plurality of points on the projection model stored in the projectionmodel storage section and the eye point conversion information is generated, so that the appropriate virtual image responsive to the vehicle model can be easily obtained.

Fifth, the invention provides an eye point conversion information generation program for causing a computer to execute the steps of the eye point conversion information generation method as fourth described above.

According to this program, the area on the projection model to which the virtual image applies is specified based on the position information of a plurality of points on the proj ection model stored in the projection model storage section and the eye point conversion information is generated, so that the appropriate virtual image responsive to the vehicle model can be easily obtained.

Advantages of the Invention

According to the invention, there can be provided a vehicle-installed image processing apparatus and an eye point conversion information generation method of the apparatus capable of easily providing an appropriate virtual image responsive to the vehicle model.

Brief Description of the Drawings

FIG. 1 is a block diagram to show the main configuration of a vehicle-installed image processing apparatus according to a first embodiment of the invention.

FIG. 2 is a flowchart to describe a procedure of a conversion table creation method of the vehicle-installed image processing apparatus according to the first embodiment of the invention.

FIG. 3 is a conceptual drawing to describe a specification method of an output range of the vehicle-installed image processing apparatus according to the first embodiment of the invention.

FIG. 4 is a conceptual drawing to describe the specification method of the output range of the vehicle-installed image processing apparatus according to the first embodiment of the invention.

FIG. 5 is a conceptual drawing to describe eye point conversion based on a projection model used in the vehicle-installed image processing apparatus according to the first embodiment of the invention.

FIG. 6 is a conceptual drawing to describe a mapping table used in the vehicle-installed image processing apparatus according to the first embodiment of the invention.

FIG. 7 is a block diagram to show the main configuration of a vehicle-installed image processing apparatus according to a second embodiment of the invention.

FIG. 8 is a conceptual drawing to show a first example of a table containing path information used in the vehicle-installed image processing apparatus according to the second embodiment of the invention.

FIG. 9 is a conceptual drawing to show a second example of a table containing path information used in the vehicle-installed image processing apparatus according to the second embodiment of the invention.

FIG. 10 is a conceptual drawing to describe a mapping table used in the vehicle-installed image processing apparatus according to the second embodiment of the invention.

FIG. 11 is a schematic representation to show an example of an output image of the vehicle-installed image processing apparatus according to the second embodiment of the invention.

FIG. 12 is a schematic representation to show the relationship among camera coordinates of a virtual camera and a real camera and world coordinates.

Description of Reference Numerals

| 1a, 1b | Vehicle |
| 2a, 2b, 11, 12 | Camera |
| 3a, 3b | Virtual camera |
| 4, 4a, 4b | Area on projection model |
| 10 | Image pickup section |
| 13, 14 | Frame memory |
| 20 | Output range specification section |
| 30 | Computation section |
| 40, 140 | Mapping table reference section |
| 41, 141 | Projection model storage section |
| 42, 142 | Mapping table storage section |
| 50, 150 | Image synthesis section |
| 60 | Image output section |
| 170 | Sensor group |
| 171 | Rudder angle sensor |

Best Mode for Carrying out the Invention

(First embodiment)

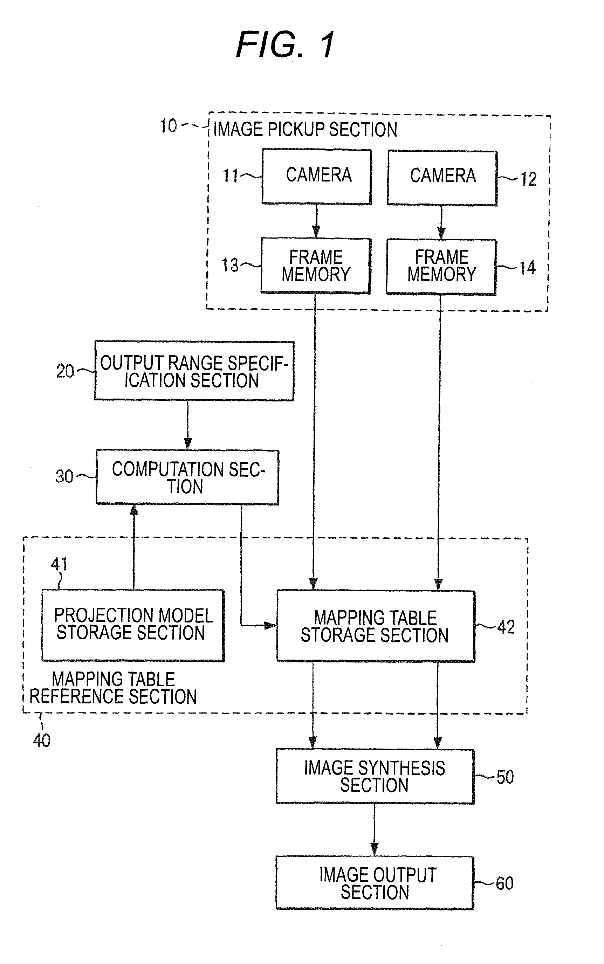

FIG. 1 is a block diagram to show the main configuration of a vehicle-installed image processing apparatus according to a first embodiment of the invention. As shown in FIG. 1, the vehicle-installed image processing apparatus of the embodiment includes an image pickup section 10, an output range specification section 20, a computation section 30, a mapping table reference section 40, an image synthesis section 50, and an image output section 60 and converts an image input from the image pickup section 10 into a virtual image viewed from a predetermined virtual eye point and outputs the virtual image as an input image.

The image pickup section 10 includes a camera 11 for photographing a real image and frame memory 13 for recording an image picked up by the camera 11. The number of the cameras of the image pickup section 10 may be one or more; the image pickup section 10 of the embodiment includes a camera 12 and frame memory 14 in addition to the camera 11 and the frame memory 13.

The output range specification section 20 specifies the area on a projection model to which an output image applies as the output range.

The computation section 30 functions as an example of a position information acquisition section and an eye point conversion information acquisition section and calculates the pixel positions of an input image required for generating an output image in the output range specified in the output range specification section 20. The computation section 30 records the calculation result in the mapping table reference section 40 as a mapping table of an example of eye point conversion information indicating the correspondence between the pixels of the output image and the pixels of the real image. The computation section 30 is implemented mainly as a processor operating according to an eye point conversion information generation program.

The mapping table reference section 40 includes a projection model storage section 41 for storing position information of a plurality of points on a predetermined projection model and a mapping table storage section 42 for storing a mapping table.

The image synthesis section 50 references the mapping table reference section 40, reads an input image corresponding to the pixels of an output image from the image pickup section 10, and generates the pixels of the output image. The image output section 60 generates an output image from the pixels generated in the image synthesis section 50 and outputs the output image.

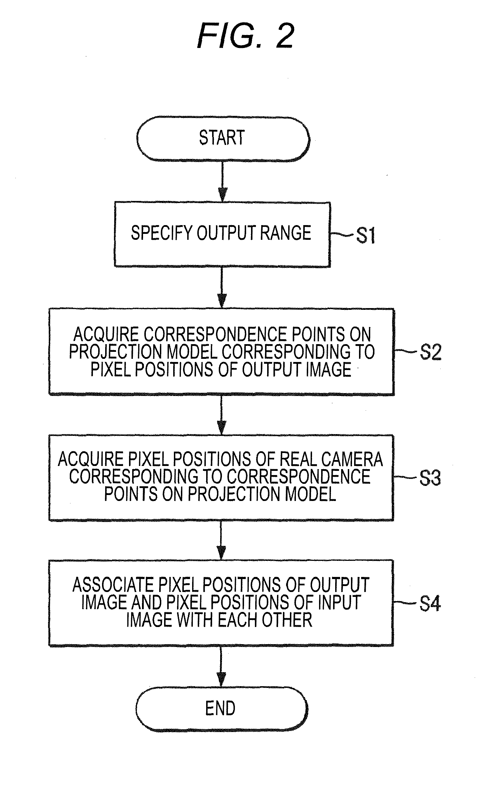

Next, the operation of the image synthesis conversion apparatus described above will be discussed. First, a mapping table creation procedure will be discussed. FIG. 2 is a flowchart to describe a procedure of a conversion table creation method of the vehicle-installed image processing apparatus according to the first embodiment of the invention.

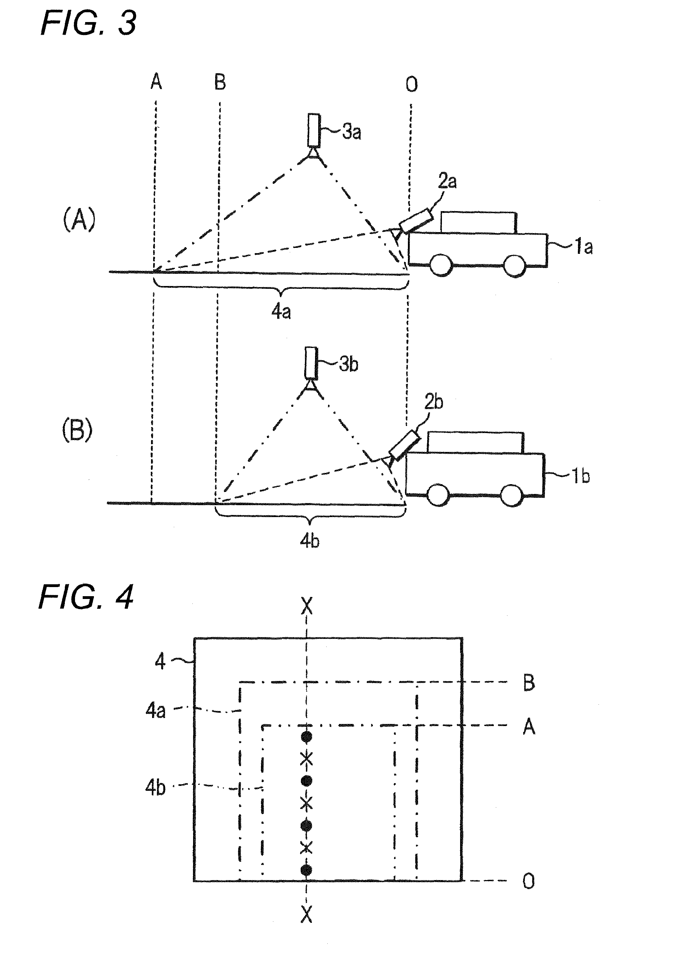

To begin with, the output range specification section 20 specifies the area on the projection model stored in the projection model storage section 41 as the output range (step S1). FIGs. 3 and 4 are conceptual drawings to describe the specification method of the output range of the vehicle-installed image processing apparatus according to the first embodiment of the invention. FIG. 3 (A) shows a vehicle 1a to which a camera 2a is attached and FIG. 3 (B) shows a vehicle 1b to which a camera 2b is attached, different in vehicle type from the vehicle 1a. In FIGs. 3 and 4, as virtual eye points for converting images picked up by the cameras 2a and 2b, virtual cameras 3a and 3b overlooking a road surface from above ahead of the vehicles 1a and 1b are taken as an example in the description to follow.

Since the cameras 2a and 2b are attached to the vehicles 1a and 1b different in vehicle type, they differ in attachment position and attachment angle and thus differ in image pickup range as indicated by the dashed lines in FIGs. 3 and 4. That is, the camera 2a picks up the range from position O to position A as shown in FIG. 3 (A); while, the camera 2b picks up the range from position O to position B.

Therefore, the image pickup range from position O to position A can be specified for the virtual camera 3a, and the image pickup range from position O to position B can be specified for the virtual camera 3b.

Then, in the embodiment, the output range specification section 20 specifies the output range in response to the range in which an image can be picked up by the real camera, whereby an appropriate virtual image responsive to the vehicle model can be easily obtained. That is, the output range specification section 20 cuts and specifies a range 4a as the image pickup range of the virtual camera 3a and a range 4b as the image pickup range of the virtual camera 3b from an area 4 stored in the projection model storage section 41, as shown in FIG. 4.

As an example of the specification method of the output range described above, the operator finds the output range by simulation for each vehicle model and each camera attachment position and enters a parameter (the range of coordinates on the projection model, etc.,) in the output range specification section 20, whereby the output range specification section 20 specifies the output range. Instead of finding the output range by the operator, the output range specification section 20 may compute the range of coordinates on the projection model, etc., based on vehicle model information, etc., and may specify the output range in response to the computation result.

Next, the computation section 30 finds the coordinate range and the sample interval determined in response to the number of pixels of an output image from the output range specified by the output range specification section 20 and acquires the coordinates of the points of the projection model corresponding to the pixel positions of the output image from the projection model storage section 41 (step S2).

If the number of the points in the area on the projection model specified as the output range stored in the projection model storage section 41 does not match the number of the pixels of the output image, the computation section 30 uses position information of the points stored in the projection model storage section 41 to execute interpolation such as thinning interpolation and finds the position information (coordinates) of the points corresponding to the pixel positions of the output image.

In the example shown in FIG. 4, in the range 4b, if the projection model storage section 41 stores four points indicated by circle marks shown in FIG. 4 as the points on line X-X and the number of the corresponding pixels of the output image is seven, the coordinates of X marks shown in FIG. 4 of the points on the projection model corresponding to the pixel positions of the output image are found. Accordingly, a mapping table can be generated flexibly in response to the output range.

Thus, the correspondence between the pixel positions of the output image and the position information on the projection model found by the computation section 30 is recorded in first storage means of the mapping table storage section 42.

The computation section 30 further acquires the pixel positions of the real camera corresponding to the correspondence points on the projection model (step S3), associates the pixel positions of the output image and the pixel positions of the input image with each other (step S4), and stores in second storage means of the mapping table storage section 42 as a mapping table.

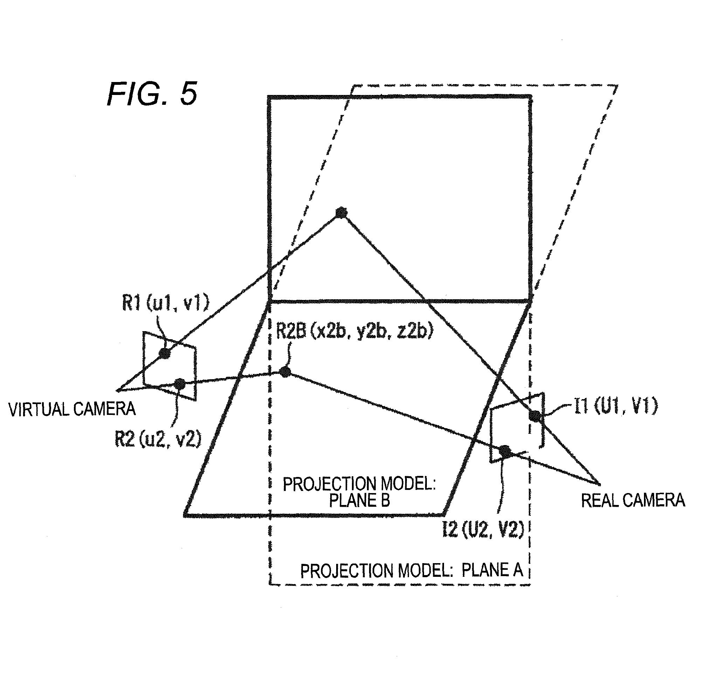

FIG. 5 is a conceptual drawing to describe eye point conversion based on a projection model used in the vehicle-installed image processing apparatus according to the first embodiment of the invention and is a drawing to show an example wherein two planes of plane A and plane B are set as projection models. In FIG. 5, the coordinates of three-dimensional positions on the two planes of plane A and plane B are stored in the projection model storage section 41.

For example, as the three-dimensional position (position information on the projection model) corresponding to a position $(u1, v1)$ of a pixel R1 of an output image, coordinates $(x1a, y1a, z1a)$ of a point R1A on the plane A are acquired at step S2 and are stored in the first storage means of the mapping table storage section 42. As the three-dimensional position corresponding to a position $(u2, v2)$ of a pixel R2 of the output image, coordinates $(x2b, y2b, z2b)$ of a point R2B on the plane B are acquired at step S2 and are stored in the first storage means of the mapping table storage section 42.

If the positional relationship between the virtual camera and the real camera can be predicted with given accuracy, it is possible to calculate which camera the correspondence point on the projection model has a correspondence point in. For example, usually the installation position of a surveillance camera, a vehicle-installed camera, etc., is limited as the position at which an image of the surveillance target, etc., can be picked up and thus the positional relationship between the virtual camera and the real camera can be predicted and the predicted position data of the real camera can be input to the computation section 30 as a camera parameter and a mapping table can be created using the record data in the first storage means of the mapping table storage section 42.

The computation section 30 calculates the pixel position on the real camera corresponding to the pixel position of the virtual camera based on the three-dimensional coordinates corresponding to the pixel position of the virtual camera obtained by referencing three-dimensional coordinate record means 32 and the separately input camera parameter of the real camera. In FIG. 5, in the first storage means of the mapping table storage section 42, for example, the coordinates $(x1a, y1a, zla)$ of the point R1A of the plane A are recorded as the three-dimensional position corresponding to the position $(u1, v1)$ of the pixel R1 of the output image, and the coordinates $(x2b, y2b, z2b)$ of the point R2B of the plane B are recorded as the three-dimensional position corresponding to the position $(u2, v2)$ of the pixel R2 of the output image, as described above.

When the projection points of the points on the real camera are calculated by perspective conversion, the point R1A is projected onto a point I1 (U1, V1) and the point R2B is projected onto a point I2 (U2, V2). The computation section 30 creates a mapping table from the result and stores the mapping table in the second storage means of the mapping table record section 42.

Since the pixel position of the real camera corresponding to the correspondence point on the projection model corresponding to the pixel on the virtual camera can be easily measured by known calibration means, if the measurement data is captured, the positional relationship between the virtual camera and the real camera can be set.

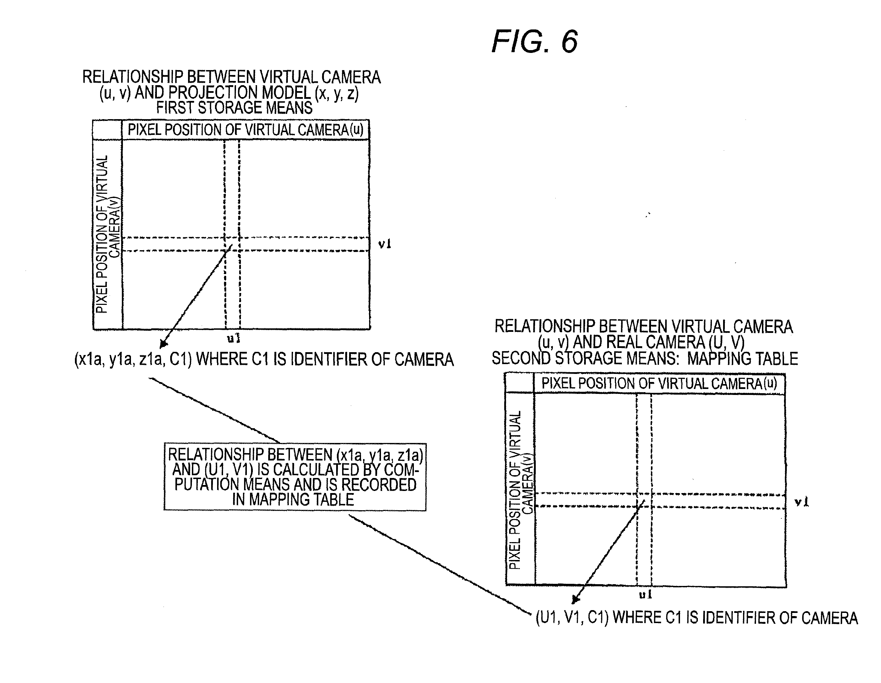

FIG. 6 is a conceptual drawing to describe a mapping table used in the vehicle-installed image processing apparatus according to the first embodiment of the invention.

The mapping table record section 42 stores the mapping table indicating the correspondence between the pixel on the virtual camera and the pixel on the real camera calculated by the computation section 30. First, the relationship between the pixel coordinate position (u, v) of the virtual camera and the coordinates (x, y, z) on the projection model found at step S2 is recorded in the first storage means of the mapping table storage section 42.

The computation section 30 calculates the relationship between the coordinates on the projection model and the pixel coordinate position (U, V) of the real camera based on the stored information at step S3, and creates the relationship between the pixel coordinate position (u, v) of the virtual camera and the pixel coordinate position (U, V) of the real camera at step S4 and stores as a mapping table. The identifier of the real camera (illustrated as "C1" in FIG. 6) and the need degree for each camera if a plurality of cameras are involved are recorded in the mapping table as required. The mapping table is thus created.

Next, the operation after the computation section 30 creates the mapping table and records the mapping table in the mapping table storage section 42 as described above will be discussed.

The image pickup section 10 records images picked up by the camera 11 and the camera 12 in the frame memory 13 and the frame memory 14 respectively. The mapping table reference section 40 references the mapping table stored in the mapping table storage section 42 and converts the pixel position of the output image generated by the image synthesis section 50 into the pixel position of the input image corresponding to the pixel. If one pixel position of the output image corresponds to a plurality of pixel positions of the input image, the need degrees for the pixels are also read from the mapping table.

The image synthesis section 50 references the mapping table reference section 40 and reads the pixel of the input image corresponding to the pixel of the output image to be generated from the image pickup section 10.

If the pixel of the output image corresponds to only one pixel of the input image, the value of the input pixel is output to the image output section 60. If the corresponding pixel does not exist, a predetermined value is output to the image output section 60.

If one pixel position of the output image corresponds to a plurality of pixel positions of the input image, the pixel values are combined in response to the need degree for each pixel at the same time as the pixel position of the input image. Simply, the pixel values are added in response to the inverse proportion of the need degree to find the pixel value of the output image. The image output section 60 generates the output image from the pixels of the output image generated by the image synthesis section 50 and outputs the output image.

According to the first embodiment of the invention, the area on the projection model to which the virtual image applies is specified based on the position information of a plurality of points on the projection model stored in the projection model storage section and the eye point conversion information is generated, so that the appropriate virtual image responsive to the vehicle model can be easily obtained.

(Second embodiment)

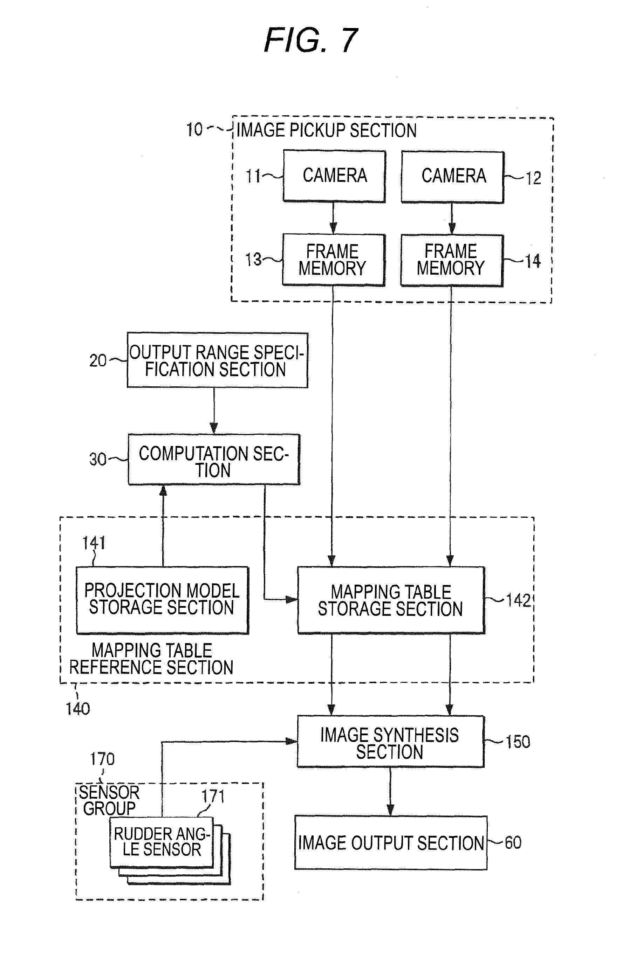

FIG. 7 is a block diagram to show the main configuration of a vehicle-installed image processing apparatus according to a second embodiment of the invention. Parts identical with or similar to those in FIG. 1 described in the first embodiment are denoted by the same reference numerals in FIG. 7.

As shown in FIG. 7, the vehicle-installed image processing apparatus of the embodiment includes an image pickup section 10, an output range specification section 20, a computation section 30, a mapping table reference section 140, an image synthesis section 150, and an image output section 60.

The mapping table reference section 140 includes a projection model storage section 141 and a mapping table storage section 142.

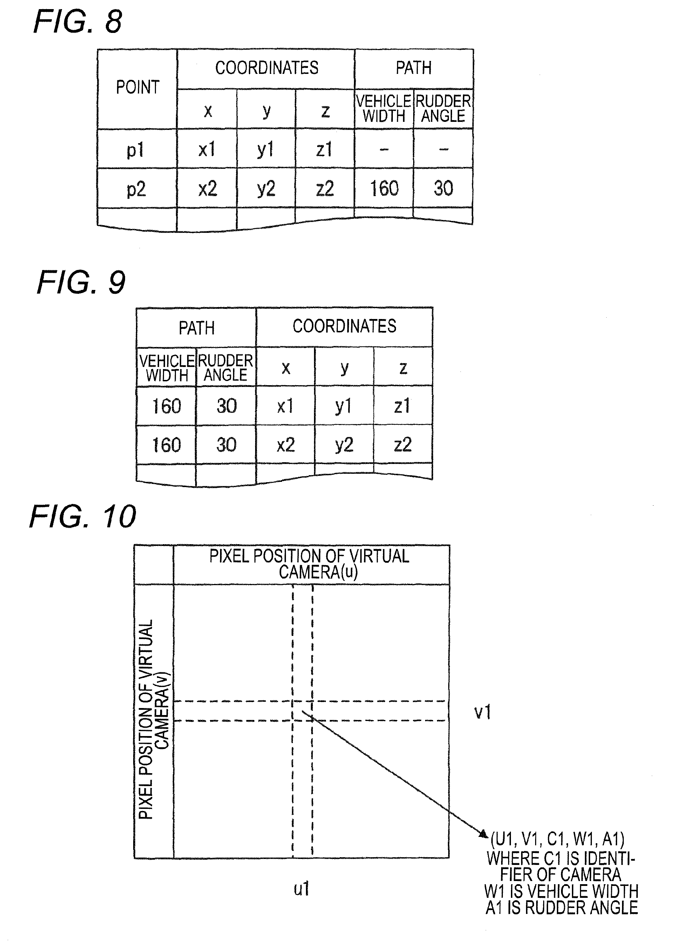

The projection model storage section 141 stores the vehicular swept path predicted in response to the state of a vehicle in association with position information of points on a projection model. An example of the data stored in the projection model storage section 141 will be discussed with reference to FIGs. 8 and 9.

FIG. 8 is a conceptual drawing to show a first example of a table containing path information used in the vehicle-installed image processing apparatus according to the second embodiment of the invention. In the example shown in FIG. 8, path data indicating the vehicular swept path predicted in response to the state of the vehicle is associated with the coordinates of points on a projection model. In the example, the vehicle width and the rudder angle of the steering wheel of the vehicle are shown as the elements indicating the state of the vehicle contained in the path data. The example shown in FIG. 8 indicates that point p2 (x2, y2, z2) is a position where it is predicted that the vehicle will run if the vehicle width of the vehicle is 160 cm and the rudder angle is 30 degrees.

FIG. 9 is a conceptual drawing to show a second example of a table containing path information used in the vehicle-installed image processing apparatus according to the second embodiment of the invention. In the example shown in FIG. 9, the coordinates of points on a projection model are associated with path data having elements of the vehicle width and the rudder angle.

To associate the pixel positions of an output image and the coordinates of the points on the projection model with each other based on the output range specified by the output range specification section 20, if path data is associated with the coordinates of the points on the projection model stored in the projection model storage section 141, the computation section 30 associates the path data with the pixel positions of the output image and records in the mapping table storage section 142. Further, the computation section 30 records the pixel positions of the output pixels with which the path data is associated in the mapping table storage section 142 in association with the pixel positions of the input image as a mapping table.

FIG. 10 is a conceptual drawing to describe a mapping table used in the vehicle-installed image processing apparatus according to the second embodiment of the invention. As shown in FIG. 10, in addition to the pixel position (U, V) of the input image, the path data of vehicle width W and rudder angle A as well as camera identifier C is added to the pixel position (u, v) of the virtual camera. Accordingly, whether or not the pixel position of the output pixel is on the predicted vehicular swept path can be determined in response to the vehicle width and the rudder angle.

Thus, the vehicle-installed image processing apparatus of the embodiment creates the mapping table associating the path data and stores it in the mapping table storage section 142. If vehicles have the same vehicle width and the same rotation radius, even if they differ in vehicle model, the paths running on the projection model are the same. For example, if vehicles differ in vehicle model or type although the same model applies, the rotation radius is often the same. In such a case, using common data, the path data can be embedded in the mapping table.

Next, the operation after the computation section 30 creates the mapping table and records the mapping table in the mapping table storage section 42 as described above will be discussed.

The image pickup section 10 records images picked up by a camera 11 and a camera 12 in frame memory 13 and frame memory 14 respectively. The mapping table reference section 140 references the mapping table stored in the mapping table storage section 142 and converts the pixel position of the output image generated by the image synthesis section 150 into the pixel position of the input image corresponding to the pixel. If one pixel position of the output image corresponds to a plurality of pixel positions of the input image, the need degrees for the pixels are also read from the mapping table.

The image synthesis section 150 references the mapping table reference section 140 and reads the pixel of the input image corresponding to the pixel of the output image to be generated from the image pickup section 10. If the pixel of the output image corresponds to only one pixel of the input image, the value of the input pixel is output to the image output section 60. If the corresponding pixel does not exist, a predetermined value is output to the image output section 60.

If one pixel position of the output image corresponds to a plurality of pixel positions of the input image, the pixel values are combined in response to the need degree for each pixel at the same time as the pixel position of the input image. Simply, the pixel values are added in response to the inverse proportion of the need degree to find the pixel value of the output image.

Further, the image synthesis section 150 superposes the predicted vehicular swept path on the output pixel with which the path data matching the current vehicle state is associated based on a signal indicating the vehicle state output from a sensor group 170 containing a rudder angle sensor 171 installed in the vehicle.

FIG. 11 is a schematic representation to show an example of an output image of the vehicle-installed image processing apparatus according to the second embodiment of the invention. As shown in FIG. 11, the image synthesis section 150 extracts pixel positions P1L, P2L, and P3L of output pixels and pixel positions P1R, P2R, and P3R of output image with which path data is associated based on a signal from the rudder angle sensor 171, connects the pixel positions as predicted vehicular swept paths LL and LR, and superposes the paths on output image VI. The image output section 60 generates the output image from the pixels of the output image and the predicted vehicular swept path generated by the image synthesis section 150 and outputs the output image.

According to the second embodiment of the invention, the path data is associated with the mapping table and thus the need for computing and finding the predicted vehicular swept path each time in response to output from the sensor is eliminated, so that the computation amount for superposing the predicted vehicular swept path on a virtual image for display can be suppressed.

In the second embodiment of the invention, the input pixel positions and the vehicle width and rudder angle data are provided in one mapping table. The mapping table may be divided into mapping data 1 having only input pixels and mapping data 2 having rudder angle display positions. The format of the data is an example and any different data format may be adopted.

While the invention has been described in detail with reference to the specific embodiments, it will be obvious to those skilled in the art that various changes and modifications can be made without departing from the spirit and the scope of the invention.

This application is based on Japanese Patent Application No. 2006-223278 filed on August 18, 2006, which is incorporated herein by reference.

Industrial Applicability

The vehicle-installed image processing apparatus and the eye point conversion information generation method of the apparatus of the invention has the advantage that it can easily provide an appropriate virtual image responsive to the vehicle model, and is useful for a vehicle-installed camera system, etc.

**Claims**

1. A vehicle-installed image processing apparatus for converting an image input from an image pickup section for picking up a real image into a virtual image viewed from a predetermined virtual eye point, the vehicle-installed image processing apparatus comprising:

   a projection model storage section for storing position information of a plurality of points on a predetermined projection model;
   a position information acquisition section for referencing the projection model storage section and acquiring position information of each point on the projection model that each pixel of the virtual image projects as a virtual image correspondence point in an area on the projection model separately specified as a display range target of the virtual image; and
   an eye point conversion information acquisition section for finding the pixel of the real image reflecting the virtual image correspondence point and acquiring eye point conversion information indicating the correspondence between the pixel of the virtual image and the pixel of the real image.

2. The vehicle-installed image processing apparatus according to claim 1, wherein if the number of the points in the specified area on the projection model stored in the projection model storage section does not match the number of the pixels of the virtual image, the position information acquisition section uses the points stored in the projection model storage section to find the position information of the virtual image correspondence points.

3. The vehicle-installed image processing apparatus according to claim 1 or 2 wherein the projection model storage section stores path data indicating a vehicular swept path predicted in response to the state of a vehicle in association with the position information of the points on the projection model, and wherein the position information acquisition section associates the position information of the virtual image correspondence points with the path data and the eye point conversion information acquisition section associates the path data with the pixels of the virtual image to generate the eye point conversion information.

4. An eye point conversion information generation method of a vehicle-installed image processing apparatus for converting an image input from an image pickup section for picking up a real image into the virtual image viewed from a predetermined virtual eye point, the eye point conversion information generation method having the steps of:

   referencing a projection model storage section for storing position information of a plurality of points on a predetermined projection model and acquiring position information of each point on the projection model that each pixel of the virtual image projects as a virtual image correspondence point in an area on the projection model separately specified as a display range target of the virtual image; and
   finding the pixel of the real image reflecting the virtual image correspondence point and acquiring eye point conversion information indicating the correspondence between the pixel of the virtual image and the pixel of the real image.

5. An eye point conversion information generation program for causing a computer to execute the steps of the eye point conversion information generation method according to claim 4.

# FIG. 1

10 — IMAGE PICKUP SECTION

11 — CAMERA    CAMERA — 12

13 — FRAME MEMORY    FRAME MEMORY — 14

20 — OUTPUT RANGE SPECIFICATION SECTION

30 — COMPUTATION SECTION

41 — PROJECTION MODEL STORAGE SECTION

42 — MAPPING TABLE STORAGE SECTION

MAPPING TABLE REFERENCE SECTION

40

50 — IMAGE SYNTHESIS SECTION

60 — IMAGE OUTPUT SECTION

# FIG. 2

START

↓

SPECIFY OUTPUT RANGE — S1

↓

ACQUIRE CORRESPONDENCE POINTS ON PROJECTION MODEL CORRESPONDING TO PIXEL POSITIONS OF OUTPUT IMAGE — S2

↓

ACQUIRE PIXEL POSITIONS OF REAL CAMERA CORRESPONDING TO CORRESPONDENCE POINTS ON PROJECTION MODEL — S3

↓

ASSOCIATE PIXEL POSITIONS OF OUTPUT IMAGE AND PIXEL POSITIONS OF INPUT IMAGE WITH EACH OTHER — S4

↓

END

*FIG. 3*

(A)

(B)

*FIG. 4*

FIG. 5

R1 (u1, v1)

R2B (x2b, y2b, z2b)

VIRTUAL CAMERA

R2 (u2, v2)

I1 (U1, V1)

PROJECTION MODEL:
PLANE B

REAL CAMERA

I2 (U2, V2)

PROJECTION MODEL: PLANE A

EP 2 053 860 A1

## FIG. 6

RELATIONSHIP BETWEEN VIRTUAL CAMERA
(u, v) AND PROJECTION MODEL (x, y, z)
FIRST STORAGE MEANS

(x1a, y1a, z1a, C1) WHERE C1 IS IDENTIFIER OF CAMERA

RELATIONSHIP BETWEEN (x1a, y1a, z1a)
AND (U1, V1) IS CALCULATED BY COM-
PUTATION MEANS AND IS RECORDED
IN MAPPING TABLE

RELATIONSHIP BETWEEN VIRTUAL CAMERA
(u, v) AND REAL CAMERA (U, V)
SECOND STORAGE MEANS: MAPPING TABLE

(U1, V1, C1) WHERE C1 IS IDENTIFIER OF CAMERA

# FIG. 7

## FIG. 8

| POINT | COORDINATES | | | PATH | |
|---|---|---|---|---|---|
| | x | y | z | VEHICLE WIDTH | RUDDER ANGLE |
| p1 | x1 | y1 | z1 | – | – |
| p2 | x2 | y2 | z2 | 160 | 30 |
| | | | | | |

## FIG. 9

| PATH | | COORDINATES | | |
|---|---|---|---|---|
| VEHICLE WIDTH | RUDDER ANGLE | x | y | z |
| 160 | 30 | x1 | y1 | z1 |
| 160 | 30 | x2 | y2 | z2 |
| | | | | |

## FIG. 10

PIXEL POSITION OF VIRTUAL CAMERA(u)

PIXEL POSITION OF VIRTUAL CAMERA(v)

v1

u1

(U1, V1, C1, W1, A1)
WHERE C1 IS IDENTI-
FIER OF CAMERA
W1 IS VEHICLE WIDTH
A1 IS RUDDER ANGLE

## FIG. 11

## FIG. 12

<div align="center">**INTERNATIONAL SEARCH REPORT**</div>

| International application No. |
| --- |
| PCT/JP2007/063604 |

A. CLASSIFICATION OF SUBJECT MATTER
*H04N7/18*(2006.01)i, *G06T1/00*(2006.01)i, *G06T3/00*(2006.01)i, *G08G1/16*
(2006.01)i

According to International Patent Classification (IPC) or to both national classification and IPC

B. FIELDS SEARCHED

Minimum documentation searched (classification system followed by classification symbols)
H04N7/18, G06T1/00, G06T3/00, G08G1/16

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2003-256874 A  (Matsushita Electric Industrial Co., Ltd.), 12 September, 2003 (12.09.03), Full text; all drawings & US 2004/201587 A1    & WO 2003/075224 A1 | 1-5 |
| Y | JP 2003-346132 A  (Toshiba Corp.), 05 December, 2003 (05.12.03), Full text; all drawings (Family: none) | 1-5 |
| Y | JP 2006-50263 A  (Olympus Corp.), 16 February, 2006 (16.02.06), Full text; all drawings & US 2006/29271 A1 | 1-5 |

☒ Further documents are listed in the continuation of Box C.          ☐ See patent family annex.

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 17 August, 2007 (17.08.07) | 28 August, 2007 (28.08.07) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2007/063604 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 7-239999 A  (Isuzu Motors Ltd.),<br>12 September, 1995 (12.09.95),<br>Full text; all drawings<br>(Family: none) | 1-5 |
| Y | JP 2000-79860 A  (Aisin Seiki Co., Ltd.),<br>21 March, 2000 (21.03.00),<br>Full text; all drawings<br>(Family: none) | 3 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 0064175 A
- JP 2003256874 A
- JP 2006223278 A